# EUROPEAN PATENT APPLICATION

(11) **EP 4 579 831 A1**
(43) Date of publication of application: **02.07.2025**
(21) Application number: 23891298.4
(22) Date of filing: 23.10.2023
(51) Int. Cl.: H01M 10/04, H01G 11/12, H01G 11/80, H01G 11/84, H01M 10/052, H01M 10/0585, H01M 50/186, H01M 50/193, H01M 50/569

(54) **METHOD FOR MANUFACTURING POWER STORAGE MODULE, AND POWER STORAGE MODULE**

(30) Priority: 18.11.2022 JP 2022184710
(71) Applicant: KABUSHIKI KAISHA TOYOTA JIDOSHOKKI, Kariya-shi, Aichi 448-8671 (JP)
(72) Inventor: OKAMOTO, Yuki, Kariya-shi, Aichi 448-8671 (JP); HIROSE, Takayuki, Kariya-shi, Aichi 448-8671 (JP); ISHIGURO, Fumihiko, Kariya-shi, Aichi 448-8671 (JP)
(74) Representative: TBK
(86) International application number: PCT/JP2023/038184
(87) International publication number: WO 2024/106143

(57) **Abstract**

A method for manufacturing a power storage module includes a first step of preparing a stack, a second step of installing a resin component having a hole portion into which the detection line is inserted in the stack so as to form a gap with a lead-out portion of the detection line in the sealing body while facing the lead-out portion, and inserting a portion of the detection line led out from the lead-out portion into the hole portion of the resin component, and a third step of forming a filling resin layer integrated with the sealing body by filling a space between the lead-out portion and the resin component with a resin by using a mold, and obtaining a power storage module including the stack, the resin component, and the filling resin layer.

## Description

### Technical Field

The present disclosure relates to a method for manufacturing a power storage module and a power storage module.

### Background Art

Patent Literature 1 describes a power storage device. The power storage device includes a cell stack including a plurality of stacked power storage cells. The power storage cell includes a positive electrode, a negative electrode, a separator, spacers, and a detection line. The positive electrode includes a positive current collector and a positive active material layer, and the negative electrode includes a negative current collector and a negative active material layer. The separator is sandwiched between the positive active material layer and the negative active material layer disposed to face each other. The spacer is disposed between an outer peripheral edge portion of the positive current collector and an outer peripheral edge portion of the negative current collector, and is formed as a frame-shaped resin portion surrounding the positive active material layer and the negative active material layer. In this power storage device, sealability of the power storage cell is maintained by the spacers welded to each of the positive current collector and the negative current collector. The detection line has a portion buried in the spacer and a portion positioned outside the power storage cell. The detection line is welded to the positive current collector at a portion buried in the spacer.

### Citation List

### Patent Literature

Patent Literature 1: Japanese Unexamined Patent Publication No. 2022-077252

### Summary of Invention

### Technical Problem

Incidentally, in the power storage device described above, it is conceivable to further form a resin layer outside the spacer which is a sealing body in order to improve sealability of a space inside the power storage cell. At this time, it is conceivable to increase a wall thickness of the resin portion as a whole by additionally forming the resin layer by a method for introducing a resin into a mold of injection molding or potting with respect to an outer side surface of the sealing body including a lead-out portion of the detection line in the sealing body. In this case, it is necessary to hold a distal end of the detection line while the resin filling is performed in order to bring the distal end of the detection line into a state of being led out to an outside of the resin layer. However, for example, in a case where the detection line is directly held by the mold, the detection line may be damaged.

An object of the present disclosure is to provide a method for manufacturing a power storage module and a power storage module capable of suppressing damage to a detection line.

### Solution to Problem

A method for manufacturing a power storage module according to the present disclosure includes a first step of preparing a stack including an electrode stack formed by stacking a plurality of electrodes each including a current collector in which an active material layer is provided and a detection line provided in the current collector along a first direction, and a sealing body provided in the electrode stack so as to surround the electrode stack, the sealing body being configured to seal an internal space between the current collectors adjacent to each other in the first direction while leading out each of the detection lines included in the plurality of electrodes to an outside, a second step of, after the first step, installing a resin component having a hole portion into which the detection line is inserted in the stack so as to form a gap with a lead-out portion of the detection line in the sealing body while facing the lead-out portion, and inserting a portion of the detection line led out from the lead-out portion into the hole portion of the resin component, and a third step of forming, after the second step, a filling resin layer integrated with the sealing body by filling a space between the lead-out portion and the resin component with a resin by using a mold, and obtaining a power storage module including the stack, the resin component, and the filling resin layer, in which, in the third step, a space surrounded by the sealing body, the resin component, and the mold is formed by holding the sealing body and the resin component with the mold, and the filling resin layer is formed by filling the space with a resin.

In this manufacturing method, first, the stack is prepared. The stack includes the electrode stack including the plurality of electrodes and the detection line, and the sealing body provided so as to surround the electrode stack while leading out the detection line to the outside. Subsequently, the resin component into which the detection line is inserted is installed so as to form a gap with the lead-out portion while facing the lead-out portion of the detection line in the sealing body. Therefore, in the subsequent step, the filling resin layer integrated with the sealing body can be formed by filling the space between the lead-out portion and the resin component (that is, the space surrounded by the sealing body, the resin component, and the mold) with the resin by using the mold while holding the sealing body and the resin component with the mold. As a result, when the filling resin layer is formed on the lead-out portion of the detection line in the sealing body, it is not necessary to directly hold the detection line with the mold, and damage to the detection line due to contact between the mold and the detection line is suppressed. In addition, the filling resin layer is additionally formed in the lead-out portion of the detection line in the sealing body, and thus, the wall thickness of the resin portion in the portion can be increased.

In the method for manufacturing a power storage module according to the present disclosure, the resin component may include a plurality of hole portions formed in a surface of the resin component facing the lead-out portion, and in the second step, the resin component may be installed in the stack such that a plurality of the detection lines are collectively inserted into the plurality of holes. In this case, since the plurality of detection lines are collectively inserted into one resin component, the number of components is reduced.

In the method for manufacturing a power storage module according to the present disclosure, an opening portion in each of the hole portions of the resin component on the lead-out portion side may be formed in a tapered shape enlarged toward the lead-out portion side. In this case, when the detection line is inserted into the hole portion of the resin component, the distal end of the detection line can be guided by the tapered opening portion of the hole portion.

In the method for manufacturing a power storage module according to the present disclosure, the resin component may have a plurality of partition walls that are provided upright on an opposite surface that is a surface opposite to a surface of the resin component facing the lead-out portion and are arrayed in the first direction, and in the second step, the resin component may be installed in the stack such that the partition wall is interposed between distal end portions of the detection lines inserted into the hole portions.. In this case, since the partition wall of the resin component is interposed between the adjacent detection lines, a short circuit between the detection lines is suppressed. As a result, lead-out locations of the plurality of detection lines can be gathered in a narrow range in the sealing body.

In the method for manufacturing a power storage module according to the present disclosure, a locking portion which has an opening in a facing surface of the resin component facing the sealing body and assists coupling between the filling resin layer and the resin component may be formed in the resin component, and in the third step, resin filling may be performed such that the filling resin layer is formed from the facing surface of the resin component to an inside of the locking portion through the opening. In this case, the fixation between the filling resin layer and the resin component is strengthened.

In the method for manufacturing a power storage module according to the present disclosure, the locking portion may be a through-hole opened to the facing surface and penetrates from the facing surface to an opposite surface of the resin component opposite to the facing surface, a widened portion wider than an opening of the through-hole in the facing surface may be formed in the through-hole, and in the third step, the resin filling may be performed such that the filling resin layer enters the widened portion of the through-hole. In this case, the fixation between the filling resin layer and the resin component is strengthened.

In the method for manufacturing a power storage module according to the present disclosure, the locking portion may be a cutout portion opened to the facing surface, a widened portion wider than an opening of the cutout portion in the facing surface may be formed in the cutout portion, and in the third step, the resin filling may be performed such that the filling resin layer enters the widened portion of the cutout portion. In this case, the fixation between the filling resin layer and the resin component is strengthened.

In the method for manufacturing a power storage module according to the present disclosure, the locking portion may be a recess opened to the facing surface, a widened portion wider than an opening of the recess in the facing surface may be formed in the recess, and in the third step, the resin filling may be performed such that the filling resin layer enters the widened portion of the recess. In this case, the fixation between the filling resin layer and the resin component is strengthened.

In the method for manufacturing a power storage module according to the present disclosure, in the third step, filling of the same resin as at least a part of the sealing body may be performed. In this case, the sealing body and the filling resin layer can be firmly integrated by dissolvability or the like between the sealing body and the resin for the filling resin layer.

A power storage module according to the present disclosure includes a stack including an electrode stack formed by stacking a plurality of electrodes each including a current collector in which an active material layer is provided and a detection line provided in the current collector along a first direction, and a sealing body provided in the electrode stack so as to surround the electrode stack, the sealing body being configured to seal an internal space of the electrode stack while leading out each of the detection lines included in the plurality of electrodes to an outside, a resin component that is disposed so as to face a lead-out portion of the detection line in the sealing body and into which the detection line is inserted, and a filling resin layer formed so as to fill a space between the lead-out portion and the resin component, in which the lead-out portion and the resin component are fixed to each other by the filling resin layer. The power storage module can be manufactured by the manufacturing method. Therefore, damage to the detection line is suppressed.

### Advantageous Effects of Invention

According to the present disclosure, it is possible to provide the method for manufacturing a power storage module and a power storage module capable of suppressing damage of a detection line.

### Brief Description of Drawings

FIG. 1 is a schematic cross-sectional view illustrating a power storage module according to the present embodiment.
FIG. 2 is a partially enlarged cross-sectional view of FIG. 1.
FIG. 3 is a schematic side view illustrating the power storage module illustrated in FIG. 1.
FIG. 4 is a schematic cross-sectional view illustrating a step of a method for manufacturing a power storage module according to the present embodiment.
FIG. 5 is a schematic cross-sectional view illustrating a step of the method for manufacturing a power storage module according to the present embodiment.
FIG. 6 is a schematic cross-sectional view illustrating a step illustrated in (a) of FIG. 5.
FIG. 7 is a perspective view illustrating a resin component according to a modification.
FIG. 8 is a schematic cross-sectional view taken along line VIII-VIII of FIG. 7.
FIG. 9 is a side view illustrating a resin component according to another modification.
FIG. 10 is a schematic cross-sectional view taken along line X-X of FIG. 9.

### Description of Embodiments

Hereinafter, a power storage module according to an embodiment will be described with reference to the drawings. In the description of each of the drawings, the same or equivalent elements will be denoted by the same reference signs, and a redundant description will not be given in some cases. In addition, an orthogonal coordinate system including a first axis defining a first direction D1, a second axis defining a second direction D2, and a third axis defining a third direction D3 may be illustrated in each of the drawings.

FIG. 1 is a schematic cross-sectional view illustrating the power storage module according to the present embodiment. FIG. 2 is a partially enlarged cross-sectional view of FIG. 1. FIG. 3 is a schematic side view illustrating the power storage module illustrated in FIG. 1. A power storage module 1 in FIGS. 1 to 3 is a power storage module to be used for batteries of various vehicles such as forklift vehicles, hybrid vehicles, and electric vehicles. The power storage module 1 is, for example, a secondary battery such as a nickel-hydrogen secondary battery or a lithium-ion secondary battery. The power storage module 1 may be an electric double-layer capacitor or an all-solid-state battery. Herein, a case where the power storage module 1 is a lithium-ion secondary battery will be illustrated.

The power storage module 1 includes an electrode stack 10 and a sealing body 20. The electrode stack 10 includes a plurality of electrodes stacked along the first direction D1. The plurality of electrodes include a plurality of bipolar electrodes 11, a positive terminal electrode 12, and a negative terminal electrode 13. A separator 14 is interposed between the electrodes adjacent to each other.

Each of the bipolar electrodes 11 includes a current collector 15, a positive active material layer 16, and a negative active material layer 17. The current collector 15 has, for example, a rectangular sheet shape. The positive active material layer 16 is provided on a first surface 15a of the current collector 15. The negative active material layer 17 is provided on a second surface 15b of the current collector 15. The bipolar electrodes 11 are stacked such that the positive active material layer 16 of one bipolar electrode 11 faces the negative active material layer 17 of another bipolar electrode 11. Herein, the first surface 15a of the current collector 15 is a surface facing one side in the first direction D1, and the second surface 15b of the current collector 15 is a surface facing the other side in the first direction D1.

The positive active material layer 16 and the negative active material layer 17 are each rectangular-shaped when viewed in the first direction D1. The negative active material layer 17 has a size larger than that of the positive active material layer 16 when viewed in the first direction D1. That is, in plan view viewed in the first direction D1, the entire area where the positive active material layer 16 is formed is positioned within an area where the negative active material layer 17 is formed.

The positive terminal electrode 12 includes the current collector 15 and the positive active material layer 16 provided on the first surface 15a of the current collector 15. The positive terminal electrode 12 does not include the positive active material layer 16 and the negative active material layer 17 on the second surface 15b of the current collector 15. That is, an active material layer is not provided on the second surface 15b of the current collector 15 of the positive terminal electrode 12. The positive terminal electrode 12 is stacked on the bipolar electrode 11 at one end portion of the electrode stack 10 in the first direction D1. The positive terminal electrode 12 is stacked on the bipolar electrode 11 such that the positive active material layer 16 thereof faces the negative active material layer 17 of the bipolar electrode 11.

The negative terminal electrode 13 includes the current collector 15 and the negative active material layer 17 provided on the second surface 15b of the current collector 15. The negative terminal electrode 13 does not include the positive active material layer 16 and the negative active material layer 17 on the first surface 15a of the current collector 15. That is, an active material layer is not provided on the first surface 15a of the current collector 15 of the negative terminal electrode 13. The negative terminal electrode 13 is stacked on the bipolar electrode 11 at an end portion of the electrode stack 10 opposite to the positive terminal electrode 12 in the first direction D1. The negative terminal electrode 13 is stacked on the bipolar electrode 11 such that the negative active material layer 17 thereof faces the positive active material layer 16 of the bipolar electrode 11.

The separator 14 is disposed between the adjacent bipolar electrodes 11, between the positive terminal electrode 12 and the bipolar electrode 11, and between the negative terminal electrode 13 and the bipolar electrode 11. The separator 14 is interposed between the positive active material layer 16 and the negative active material layer 17. The separator 14 is a member that causes charge carrier such as lithium ions to pass through, and separates the positive active material layer 16 and the negative active material layer 17 to prevent a short circuit due to contact between the adjacent electrodes.

The current collector 15 is a chemically inactive electric conductor that causes a current to continuously flow through the positive active material layer 16 and the negative active material layer 17 during discharge or charge of the lithium-ion secondary battery. A material of the current collector 15 is, for example, a metal material, a conductive resin material, a conductive inorganic material, or other materials. Examples of the conductive resin material include a resin obtained by adding a conductive filler to a conductive polymer material or a non-conductive polymer material as necessary. The current collector 15 may include a plurality of layers. In this case, each layer of the current collector 15 may contain the above-described metal material and/or conductive resin material.

A covering layer may be formed on a surface of the current collector 15. The covering layer may be formed by a known method such as plating or spray coating. The current collector 15 may have, for example, a plate shape, a foil shape (for example, metal foil), a film shape, a mesh shape, or other shapes. Examples of the metal foil include an aluminum foil, a copper foil, a nickel foil, a titanium foil, and a stainless steel foil. The current collector 15 may be a foil formed by integrating a metal alloy foil or a plurality of metal foils. In a case where the current collector 15 has a foil shape, a thickness of the current collector 15 may be, for example, 1 µm to 200 µm. In the present embodiment, the current collector 15 is a foil in which an aluminum foil and a copper foil are integrated, or an aluminum foil.

The positive active material layer 16 contains a positive active material capable of occluding and releasing charge carriers such as lithium ions. Examples of the positive active material include a lithium composite metal oxide having a stratified rock salt type structure, a metal oxide having a spinel structure, and a polyanionic compound. The positive active material may be any material that can be used for the lithium-ion secondary battery. The positive active material layer 16 may contain a plurality of the positive active materials. In the present embodiment, the positive active material layer 16 contains olivine type lithium iron phosphate (LiFePO₄) as a composite oxide.

The negative active material layer 17 contains a negative active material capable of occluding and releasing charge carriers such as lithium ions. The negative active material may be any of a simple substance, an alloy, or a compound. Examples of the negative active material include Li, carbon, a metal compound, and other materials. The negative active material may be an element that can be alloyed with lithium, a compound thereof, or other materials. Examples of the carbon include natural graphite, artificial graphite, hard carbon (non-graphitizing carbon), soft carbon (graphitizing carbon), and other carbon materials. Examples of the artificial graphite include highly oriented graphite, meso-carbon microbeads, and other artificial graphite. Examples of the element that can be alloyed with lithium include silicon, tin, and other elements. In the present embodiment, the negative active material layer 17 contains graphite as a carbon-based material.

Each of the positive active material layer 16 and the negative active material layer 17 (hereinafter, also simply referred to as an "active material layer" in some cases) may further contain a conductive auxiliary, a binder, an electrolyte (e.g., polymer matrix, ion conductive polymer, or electrolytic solution) for increase electric conductivity and a supporting electrolyte salt (lithium salt) for increasing ion conductivity as necessary. The conductive auxiliary is added to increase the electric conductivity of each of the electrodes (the bipolar electrodes 11, the positive terminal electrode 12, and the negative terminal electrode 13). The conductive auxiliary is, for example, acetylene black, carbon black, or graphite.

Examples of the binder include fluorine-containing resins such as polyvinylidene fluoride, polytetrafluoroethylene, and fluororubber, thermoplastic resins such as polypropylene and polyethylene, imide resins such as polyimide and polyamidimide, alkoxysilyl group-containing resins, acrylic resins such as acrylic acid and methacrylic acid, styrenebutadiene rubber (SBR), carboxymethyl cellulose, alginates such as sodium alginate and ammonium alginate, water-soluble cellulose ester crosslinked bodies, and starch-acrylic acid graft polymers. The binders can be used alone or in combination. For example, water, N-methyl-2 pyrrolidone (NMP), or the like is used as a solvent of the binder.

The separator 14 may be, for example, a porous sheet or a nonwoven fabric containing a polymer that absorbs and holds an electrolyte. Examples of a material of the separator 14 include polypropylene, polyethylene, polyolefin, and polyester. The separator 14 may have a single layer structure or a multilayer structure. The multilayer structure may have, for example, a ceramic layer or the like as an adhesive layer or a heat resistant layer. The separator 14 may be impregnated with an electrolyte. The electrolyte with which the separator 14 is impregnated is a liquid electrolyte (electrolytic solution) containing a nonaqueous solvent and an electrolyte salt dissolved in the nonaqueous solvent.

Known lithium salts such as LiClO₄, LiAsF₆, LiPF₆, LiBF₄, LiCF₃SO₃, LiN(FSO₂)₂, and LiN(CF₃SO₂)₂ may be used as the electrolyte salt of the electrolyte. In addition, a known solvent such as cyclic carbonates, cyclic esters, chain carbonates, chain esters, or ethers may be used as the nonaqueous solvent. Note that two or more of these known solvent materials may be used in combination.

Here, the current collector 15 is provided with a detection line 30. Herein, the detection line 30 is disposed on the second surface 15b of the current collector 15, and is connected (for example, ultrasonically welded) to the current collector 15. As an example, one detection line 30 is provided in each of the current collectors 15 of all the electrodes. As a result, in the power storage module 1, it is possible to detect a battery state (for example, a voltage) of a cell including the electrodes adjacent to each other by using a pair of the detection lines 30 adjacent to each other along the first direction D1 by an external device. The detection line 30 is, for example, a voltage detection line.

The detection line 30 has a long foil shape and is made of, for example, metal. More specifically, the current collector 15 and the detection line 30 may be made of different types of metal, and in this case, a thermal conductivity of metal forming the detection line 30 may be lower than a thermal conductivity of metal forming the current collector 15. In the present embodiment, the detection line 30 is a stainless foil.

The sealing body 20 is formed in a frame shape at a peripheral edge portion of the electrode stack 10 to surround the electrode stack 10 when viewed in the first direction D1. The sealing body 20 can be joined (welded) to each of the first surface 15a and the second surface 15b of the current collector 15, at a peripheral edge portion 15c of each of the current collectors 15. The sealing body 20 is provided to form internal spaces S between the adjacent current collectors 15 in the first direction D1, and seal each of the internal spaces S. An electrolyte (for example, an electrolytic solution) is contained in each of the internal spaces S. The sealing body 20 can block the permeation of the electrolytic solution to the outside.

In addition, the sealing body 20 can suppress intrusion of moisture and the like from the outside of the electrode stack 10 into the internal spaces S. A lead-out portion 20p for leading out the detection line 30 to the outside is formed in the sealing body 20.

That is, in the power storage module 1, a stack 100 that includes the electrode stack 10 formed by stacking the plurality of electrodes (the plurality of bipolar electrodes 11, the positive terminal electrode 12, and the negative terminal electrode 13) each including the current collector 15 in which the active material layer (the positive active material layer 16 or the negative active material layer 17) is provided and the detection line 30 provided in the current collector 15 along the first direction D1, and the sealing body 20 provided in the electrode stack 10 so as to surround the electrode stack 10 and sealing the internal space S between the current collectors 15 adjacent in the first direction D1 while leading out each of the detection lines 30 of the plurality of electrodes to the outside. The sealing body 20 is formed in a rectangular frame shape as viewed in the first direction D1, and the lead-out portion 20p is provided in a portion corresponding to one side of four sides of the sealing body 20 when viewed in the first direction D1.

Edge portions of the separators 14 are joined to the sealing body 20. The sealing body 20 includes an insulating material. Examples of a material of the sealing body 20 include various resin materials such as polypropylene, polyethylene, polystyrene, ABS resin, acid-modified polypropylene, acid-modified polyethylene, and acrylonitrile styrene resin.

The sealing body 20 includes a plurality of sealing members 21 made of a resin and a plurality of spacers 22 made of a resin. Each of the sealing members 21 is provided in each of the current collectors 15. Therefore, the sealing members 21 are stacked on top of each other along the first direction D1. The sealing member 21 has a frame shape (in this case, a rectangular frame shape) when viewed in the first direction D1, and is provided on the peripheral edge portion 15c of the current collector 15. That is, the sealing member 21 is provided to extend from the first surface 15a to the second surface 15b of the corresponding current collector 15 through its end surface, and covers the peripheral edge portion 15c. The sealing member 21 can be welded to the first surface 15a and the second surface 15b of the current collector 15. Herein, the sealing member 21 is welded to the current collector 15 and the detection line 30 joined to the current collector 15.

Each of the spacers 22 is disposed to be interposed between the sealing members 21 adjacent to each other in the first direction D1. As a result, the spacer 22 holds a space between the adjacent sealing members 21, that is, between the adjacent current collectors 15, and forms the internal space S together with the sealing members 21. The spacer 22 has a frame shape (in this case, a rectangular frame shape) when viewed in the first direction D1, and is disposed on the peripheral edge portion 15c of the current collector 15 when viewed in the first direction D1. Herein, an end portion of the separator 14 is sandwiched and held between the sealing member 21 and the spacer 22. The separator 14 can be welded to at least one of the sealing member 21 and the spacer 22.

The sealing body 20 further includes a welded end portion 23 formed by welding and integrating end portions of the plurality of sealing members 21 and the plurality of spacers 22 opposite to the internal spaces S. The welded end portion 23 has a frame shape to surround the electrode stack 10 when viewed in the first direction D1 and forms an outer peripheral portion of the sealing body 20. Therefore, the sealing members 21 and the spacers 22 are welded to each other, and thus, the sealing body 20 has an outer side surface 20s (an outer side surface of the welded end portion 23) formed by end surfaces of the sealing members 21 opposite to the internal spaces S and end surfaces of the spacers 22 opposite to the internal spaces S.

The detection line 30 extends from the current collector 15 and is led out from the outer side surface 20s along the second direction D2 intersecting (orthogonal to) the first direction D1. Herein, the outer side surface 20s has a rectangular tubular shape according to an outer shape of the sealing body 20, and has four surfaces. The lead-out portions 20p of the detection lines 30 from the outer side surface 20s are gathered on one surface among the four surfaces constituting the outer side surface 20s.

On the other hand, in the lead-out portions 20p, lead-out positions of the detection lines 30 adjacent to each other in the first direction D1 are provided at mutually different positions in the third direction D3 intersecting (orthogonal to) the first direction D1 and the second direction D2 (see FIG. 3). That is, the lead-out positions of the detection lines 30 are aligned at a plurality of (here, three) positions in the third direction D3. Therefore, at least two (two or three in the illustrated example) of the plurality of detection lines 30 are disposed so as to overlap each other when viewed in the first direction D1. In the present embodiment, the lead-out positions of the detection lines 30 are gathered on one surface of the four surfaces constituting the outer side surface 20s as described above, and are further gathered in a partial area of the one surface. In the illustrated example, the lead-out positions of the detection lines 30 (that is, the lead-out portions 20p) are formed on one side of a center of one surface constituting the outer side surface 20s in the third direction D3. As a result, an area 20r where the lead-out portions 20p of the detection lines 30 are not formed is formed on the other side of at least the center of the one surface in the third direction D3. Note that, in FIG. 3, a filling resin layer 40 and a resin component 50 illustrated in FIG. 1 are omitted.

Note that a portion of the detection line 30 closer to the electrode stack 10 than the outer side surface 20s is embedded in the sealing member 21 in a portion where the sealing member 21 and the spacer 22 overlap each other along the first direction D1. Herein, the detection line 30 is terminated inside the sealing member 21, and the entire portion of the detection line 30 closer to the electrode stack 10 than the outer side surface 20s is embedded and covered by the sealing member 21. As a result, the detection line 30 is not in contact with the spacer 22.

In addition, a material of the sealing member 21 can be appropriately selected from the above-described materials of the sealing body 20, and is, for example, an acid-modified resin. As a result, when the current collector 15 and the detection line 30 are made of metal, joint strength between the sealing member 21 and each of the current collector 15 and the detection line 30 is secured. Meanwhile, the material of the spacer 22 can also be appropriately selected from the above-described materials of the sealing body 20, but is not necessarily an acid-modified resin.

A surface of an outer side surface of the sealing body 20 on which the lead-out portion 20p is provided includes protrusions 21k that protrude to a side opposite to the electrode stack 10 along the second direction D2 (a lead-out direction of the detection line 30). The protrusions 21k can be formed, for example, by causing the end surfaces of the sealing members 21 to protrude from the spacers 22 along the second direction D2 before forming the welded end portion 23. As described above, the lead-out portions 20p of the detection lines 30 are gathered on one surface among the four surfaces constituting the outer side surface 20s.

Therefore, the protrusions 21k are also formed only on one surface among the four surfaces constituting the outer side surface 20s. In addition, the protrusion 21k is formed to have a width over the entire lead-out portion 20p in the third direction D3. Herein, one protrusion 21k is provided over all the lead-out portions 20p when viewed in the first direction D1.

The protrusions 21k are separated from each other in the first direction D1. Therefore, on the outer side surface 20s of the sealing body 20, in an area between the adjacent protrusions 21k (for example, an area corresponding to the end surface of the spacer 22), a recess 22k recessed toward the electrode stack 10 along the second direction D2 is formed. When the welded end portion 23 is formed, since the molten sealing member 21 and spacer 22 are dissolved with each other, the molten resin flows from the protrusion 21k to the recess 22k, and a large amount of resin is secured between the sealing member 21 and the spacer 22. In addition, the protrusion 21k and the recess 22k are gently connected.

Note that conductive members 60 each functioning as a terminal for extracting a current from the power storage module 1 are disposed one-to-one on and electrically connected one-to-one to a portion of the second surface 15b of the current collector 15 of the positive terminal electrode 12 exposed from the sealing body 20 and a portion of the first surface 15a of the current collector 15 of the negative terminal electrode 13 exposed from the sealing body 20. Such a conductive member 60 as described above can be used to electrically connect a plurality of power storage modules 1. In addition, the conductive member 60 can also be used as a restraining member in order to apply a restraining load to the electrode stack 10. Further, a cooling flow path may be provided in the conductive member 60. The electrode stack 10 can be cooled by circulating a cooling medium through the cooling flow path provided in the conductive member 60.

Herein, the power storage module 1 further includes the filling resin layer 40 and the resin component 50. The resin component 50 is disposed so as to be separated from the lead-out portion 20p of the sealing body 20, and a main portion of the filling resin layer 40 is provided so as to fill a space between the lead-out portion 20p and the resin component 50. Therefore, the filling resin layer 40 comes into contact with both the sealing body 20 (lead-out portion 20p) and the resin component 50. In the present embodiment, the resin component 50 is separated from the lead-out portion 20p (may include a portion coming into contact with the lead-out portion 20p). In particular, the filling resin layer 40 is made of the same resin material as at least a part of the sealing body 20 (for example, the sealing member 21 or the spacer 22), and is dissolved and integrated with the sealing body 20.

The filling resin layer 40 includes a body portion 41 interposed between the sealing body 20 (lead-out portion 20p) and the resin component 50, and a pair of extending portions 42 extending from the body portion 41 along a direction intersecting the first direction D1 (a plane direction including the second direction D2 and the third direction D3) and positioned on one end surface 20a and the other end surface 20b of the sealing body 20 in the first direction D1. The detection line 30 penetrates the body portion 41. In other words, the body portion 41 covers each of the detection lines 30. Each of the pair of extending portions 42 extends to a position overlapping the current collector 15 when viewed in the first direction D1. Note that one end surface 20a of the sealing body 20 includes an outer surface of the sealing member 21 provided in the positive terminal electrode 12. In addition, the other end surface 20b of the sealing body 20 includes an outer surface of the sealing member 21 provided in the negative terminal electrode 13.

The resin component 50 holds each of the detection lines 30. More specifically, the resin component 50 includes a plurality of partition walls 51 disposed along the first direction D1, and an accommodation space 52 is formed between the partition walls 51 adjacent to each other. A distal end portion of the detection line 30 is accommodated in the accommodation space 52. Therefore, when viewed from the third direction D3, the partition wall 51 is interposed between the distal end portions of the adjacent detection lines 30. The accommodation space 52 is opened to a side opposite to a surface 50a of the resin component 50 opposite to the sealing body 20.

In addition, a plurality of communication holes (hole portions) 53 which penetrate a surface of the resin component 50 on the sealing body 20 side (a facing surface 50b facing the sealing body 20) and communicate with the accommodation spaces 52 are formed in the resin component 50. Each of the detection lines 30 led out from the lead-out portion 20p of the sealing body 20 is inserted into the communication hole 53 and reaches the inside of each of the accommodation spaces 52. As described above, the resin component 50 includes the plurality of communication holes 53 formed in the facing surface 50b of the resin component 50 facing the lead-out portion 20p, and the detection line 30 is inserted into the communication hole 53. In addition, the resin component 50 includes the plurality of partition walls 51 provided upright on the surface 50a of the resin component 50 opposite to the facing surface 50b facing the lead-out portion 20p and arrayed in the first direction D1. An opening portion 53a of the communication hole 53 on the lead-out portion 20p side is formed in a tapered shape enlarged toward the lead-out portion 20p side. As a result, when the detection line 30 is inserted into the communication hole 53, the distal end of the detection line 30 is guided to the communication hole 53 by a tapered surface of the opening portion 53a. As described above, in the present embodiment, the plurality of detection lines 30 are collectively held by the single resin component 50. Note that the partition wall 51 is formed to be longer than the distal end portion of the detection line 30 accommodated in the accommodation space 52, and the detection line 30 is terminated inside the accommodation space 52. The detection line 30 can be electrically connected by connecting a wiring or the like to the inside of the accommodation space 52 from the outside.

In the resin component 50, a recess (locking portion) 54 is formed on the facing surface 50b facing the lead-out portion 20p. The recess 54 has an opening portion 54a on the facing surface 50b and includes a widened portion 54b enlarged on an inner side (face 50a side) of the opening portion 54a. That is, in the recess 54, a width of the widened portion 54b in a direction intersecting the second direction D2 (the first direction D1 in the example of FIG. 2) is larger than a width of the opening portion 54a in the direction intersecting the second direction D2. As a result, a locking surface 54s that is a surface intersecting the second direction D2 and faces the side opposite to the sealing body 20 is formed on the resin component 50. The locking surface 54s is a surface of the resin component 50 in an orientation opposite to the facing surface 50b facing the sealing body 20. In addition, the locking surface 54s is an inner surface of the recess 54, and is a step surface between the opening portion 54a of the recess 54 and the widened portion 54b. The filling resin layer 40 is also filled in the recess 54. More specifically, the filling resin layer 40 is filled in the recess 54 so as to be formed at least from the facing surface 50b to the locking surface 54s. As a result, the filling resin layer 40 formed in the recess 54 is locked to the locking surface 54s when the resin component 50 is about to be separated from the sealing body 20, and functions as a stopper. That is, the resin component 50 and the filling resin layer 40 can be firmly fixed to each other by an anchor effect due to a portion of the filling resin layer 40 filled in the recess 54. Therefore, a material of the resin component 50 is not limited in fixing the resin component 50 and the filling resin layer 40. As described above, the recess 54 is a locking portion that has an opening in the facing surface 50b and assists coupling between the filling resin layer 40 and the resin component 50. Note that although one recess 54 is illustrated in the illustrated example, a plurality of recesses 54 may be formed in the resin component 50. In this case, the plurality of recesses 54 may be disposed at symmetrical positions with respect to a center line of the resin component 50 in the first direction D1.

Subsequently, a power storage module manufacturing method for manufacturing the power storage module 1 will be described. FIGS. 4 and 5 are a schematic cross-sectional view illustrating a step of a method for manufacturing a power storage module according to the present embodiment. In FIGS. 4 and 5, only a part (center portion in a stacking direction) of each stack created in each step is illustrated. As illustrated in (a) of FIG. 4, in this manufacturing method, first, the electrodes (bipolar electrodes 11, positive terminal electrode 12, and negative terminal electrode 13) in which the sealing members 21 are provided are stacked with the spacers 22 interposed therebetween (step S101, first step). Note that, as described above, when the sealing members 21 and the spacers 22 are stacked, the sealing member 21 corresponding to the surface of the outer side surface 20s including the lead-out portion 20p of the detection line 30 is provided so as to protrude with respect to the spacer 22. For example, the sealing member 21 may be provided so as to protrude from the spacer 22 by cutting in advance a part of the outer peripheral portion of the spacer 22 overlapping the sealing member 21 to protrude.

Subsequently, as illustrated in (b) of FIG. 4, the end surfaces of the sealing member 21 and the spacer 22 are heated and melted by a heater H to form the welded end portion 23 (step S101, first step). Thus, the stack 100 is obtained. That is, in step S101, the stack 100 including the electrode stack 10 formed by stacking the plurality of electrodes each including the current collector 15 in which the active material layer is provided and the detection line 30 provided in the current collector 15 along the first direction D1, and the sealing body 20 provided in the electrode stack 10 so as to surround the electrode stack 10 and sealing the internal space S between the current collectors 15 adjacent in the first direction D1 while leading out each of the detection lines 30 of the plurality of electrodes to the outside is prepared. At this time, on the surface of the outer side surface 20s including the lead-out portion 20p of the detection line 30, the sealing member 21 protruding with respect to the spacer 22 forms the welded end portion 23, and thus, the protrusion 21k and the recess 22k are formed. Note that, in the portion of the sealing member 21 in which the detection line 30 is embedded, the heat is transferred to the detection line 30, and thus, a melting amount is smaller than in the other portion of the sealing member 21. Therefore, as illustrated in (b) of FIG. 4, a melting allowance in the second direction D2 in the portion of the sealing member 21 where the detection line 30 is embedded can be reduced.

Subsequently, as illustrated in (c) of FIG. 4, the resin component 50 having the communication hole 53 into which each of the plurality of detection lines 30 is inserted is installed so as to form a gap with the lead-out portion 20p while facing the lead-out portion 20p of the detection line 30 in the sealing body 20 (step S102, second step). In step S102, each of the detection lines 30 is inserted into each of the communication holes 53 of the resin component 50, and thus, each of the detection lines 30 is held by the resin component 50. That is, in step S102, one resin component 50 is installed in the stack 100 such that the plurality of detection lines 30 are collectively inserted.

Further, in step S102, the resin component 50 is installed in the stack 100 so as to hold each of the plurality of detection lines 30 so as to individually surround each of the plurality of detection lines 30 while interposing the partition wall 51 between the distal end portions of the plurality of detection lines.

Subsequently, as illustrated in FIGS. 5 and 6, a space between the lead-out portion 20p and the resin component 50 is filled with a resin by using a mold MD to form the filling resin layer 40 integrated with the sealing body 20, and the power storage module 1 including the stack 100, the resin component 50, and the filling resin layer 40 is obtained (step S103, third step). More specifically, in step S104, first, as illustrated in (a) of FIG. 5 and FIG. 6, the mold MD is installed in the stack 100.

The mold MD includes a body portion MD1 facing the surface 50a of the resin component 50 and coming into contact with a distal end surface of the partition wall 51, a pair of extending portions MD2 extending from both end portions of the body portion MD1 in the first direction D1 in the direction intersecting the first direction D1 (the plane direction including the second direction D2 and the third direction D3), and a pair of gripping portions MD3 provided at end portions of the extending portions MD2 opposite to the body portion MD1. The gripping portion MD3 grips the stack 100 along the first direction D1. In particular, the gripping portions MD3 grip the stack 100 in an area where the current collectors 15, the sealing members 21, and the spacers 22 overlap.

At this time, a gap G41 for the body portion 41 of the filling resin layer 40 is maintained between the resin component 50 and the sealing body 20, and a gap G42 for the extending portion 42 is formed between the mold MD (the extending portion MD2 and the gripping portion MD3) and the sealing body 20. That is, in step S103, a space (gap G41 and gap G42) surrounded by the sealing body 20, the resin component 50, and the mold MD is formed by holding the sealing body 20 and the resin component 50 with the mold MD. Note that the mold MD includes side wall portions (not illustrated) provided at both ends of the mold MD in the third direction D3 to close the space. Thereafter, as illustrated in (b) of FIG. 4, a resin is introduced into the mold MD to fill the gaps G41 and G42 (that is, the space surrounded by the sealing body 20, the resin component 50, and the mold MD), and thus, the filling resin layer 40 is formed. The body portion 41 of the filling resin layer 40 is made of the resin filled and solidified in the gap G41, and the extending portion 42 of the filling resin layer 40 is made of the resin filled and solidified in the gap G42. In addition, a part of the resin filled in the gap G41 is also filled in the gap between the communication hole 53 of the resin component 50 and the detection line 30 and solidified. Note that, in step S103, the resin filling is performed such that the filling resin layer 40 enters the inside of the recess 54 from the facing surface 50b of the resin component 50 through the opening (opening portion 54a) of the recess 54 as the locking portion and fills the recess 54. More specifically, in step S103, resin filling is performed such that the filling resin layer 40 is formed at least from the facing surface 50b of the resin component 50 facing the sealing body 20 to the locking surface 54s (that is, the filling resin layer enters the widened portion 54b of the recess 54) (in the present embodiment, the filling resin layer 40 is formed over the entire recess 54).

Thereafter, the power storage module 1 is taken out by releasing the mold MD. Note that the resin filling in step S103 may be performed by injection molding using the mold MD, or may be performed by another filling method such as potting. As described above, in step S103, the space between the lead-out portion 20p and the resin component 50 is filled with the resin while holding the sealing body 20 and the resin component 50 with the mold MD, that is, without directly holding the detection line 30 with the mold MD.

As described above, in the power storage module manufacturing method according to the present embodiment, first, the stack 100 is prepared. The stack 100 includes the electrode stack 10 including the plurality of electrodes and the detection line 30, and the sealing body 20 provided so as to surround the electrode stack 10 while leading out the detection line 30 to the outside. Subsequently, the resin component 50 having the communication hole 53 into which the detection line 30 is inserted is installed so as to form the gap with the lead-out portion 20p while facing the lead-out portion 20p of the detection line 30 in the sealing body 20.

Therefore, in the subsequent step, the space between the lead-out portion 20p and the resin component 50 (that is, the space surrounded by the sealing body 20, the resin component 50, and the mold MD) is filled with the resin using the mold MD while holding the sealing body 20 and the resin component 50 with the mold MD, and thus, the filling resin layer 40 integrated with the sealing body 20 can be formed. As a result, when the filling resin layer 40 is formed on the lead-out portion 20p of the detection line 30 in the sealing body 20, it is not necessary to directly hold the detection line 30 with the mold MD, and damage to the detection line 30 due to contact between the mold MD and the detection line 30 is suppressed.

In addition, the filling resin layer 40 is additionally formed in the lead-out portion 20p of the detection line 30 in the sealing body 20, and thus, a wall thickness of the resin portion in the portion can be increased. As a result, the permeation of moisture and the like is suppressed and the pressure resistance strength is improved. Further, since the detection line 30 is held so as to be surrounded by the resin component 50 when the mold MD is released, deformation or the like of the detection line 30 is suppressed. Note that when the detection line 30 is directly held by the mold MD without using the resin component 50 at the time of resin filling, since it is necessary to form a gap in consideration of an error in the position of the detection line 30 in the stacking direction (first direction D1) in the mold MD, burrs may be generated around the detection line 30, and the electrical connection with the outside may be adversely influenced.

In addition, in the power storage module manufacturing method according to the present embodiment, the resin component 50 includes the plurality of communication holes 53 formed in the facing surface 50b of the resin component 50 facing the lead-out portion 20p, and in step S102, the resin component 50 is installed in the stack 100 such that the plurality of detection lines 30 are collectively inserted into the plurality of communication holes 53. As described above, since the plurality of detection lines 30 are collectively inserted into one resin component 50, the number of components is reduced.

In addition, in the power storage module manufacturing method according to the present embodiment, the opening portion of each of the communication holes 53 of the resin component 50 on the lead-out portion 20p side is formed in the tapered shape enlarged toward the lead-out portion 20p side. Therefore, when the detection line 30 is inserted into the communication hole 53 of the resin component 50, the distal end of the detection line 30 can be guided by the tapered opening portion of the communication hole 53.

In addition, in the power storage module manufacturing method according to the present embodiment, the resin component 50 includes the plurality of partition walls 51 provided upright on the surface 50a of the resin component 50 opposite to the facing surface 50b facing the lead-out portion 20p and arrayed in the first direction D1. In step S102, the resin component 50 is installed in the stack 100 such that the partition wall 51 is interposed between the distal end portions of the plurality of detection lines 30 inserted into the communication hole 53. Therefore, since the partition wall 51 of the resin component 50 is interposed between the adjacent detection lines 30, a short circuit between the detection lines 30 is suppressed.

As a result, lead-out locations of the plurality of detection lines 30 can be gathered in a narrow range in the sealing body 20. That is, the area of the outer side surface 20s of the sealing body 20 where the lead-out portion 20p is provided can be narrowed. As a result, for example, a laminate film including a metal layer can be bonded to a wider area of the outer side surface 20s (for example, the area 20r illustrated in FIG. 3).

In addition, in the power storage module manufacturing method according to the present embodiment, the resin component 50 has the opening in the facing surface 50b facing the sealing body 20, and the locking portion which assists the coupling between the filling resin layer 40 and the resin component 50 is formed on the resin component, and in step S103, the resin filling is performed such that the filling resin layer 40 is formed over the inside of the locking portion from the facing surface 50b of the resin component 50 through the opening. Therefore, the fixation between the filling resin layer 40 and the resin component 50 is strengthened.

In addition, in the power storage module manufacturing method according to the present embodiment, the recess 54 opened to the surface of the resin component 50 facing the lead-out portion 20p (facing surface 50b facing the sealing body 20) is formed (that is, the locking portion is the recess 54). The widened portion 54b wider than the opening of the recess 54 is formed in the recess 54. The locking surface 54s is formed in the widened portion 54b. In step S103, the resin filling is performed such that the filling resin layer 40 enters the widened portion 54b of the recess 54 (such that the filling resin layer 40 is formed at least from the facing surface 50b to the locking surface 54s). Therefore, the fixation between the filling resin layer 40 and the resin component 50 is strengthened.

In addition, in the power storage module manufacturing method according to the present embodiment, in step S103, at least a part of the sealing body 20 is filled with the same resin. Therefore, the sealing body 20 and the filling resin layer 40 can be firmly integrated by dissolvability or the like between the sealing body 20 and the resin for the filling resin layer 40.

Further, the power storage module 1 according to the present embodiment can be manufactured by the power storage module manufacturing method. Therefore, the damage to the detection line 30 is suppressed.

The above embodiment describes one aspect of the present invention. Therefore, the present invention is not limited to the above one aspect, and may be any modification of the above one aspect.

For example, the material of the resin component 50 can be made of, for example, a material (for example, acryl) different from the sealing body 20 and the filling resin layer 40. In addition, the resin component 50 and the filling resin layer 40 may be dissolved by using a material similar to the material of the filling resin layer 40 as the material of the resin component 50.

In addition, in the above embodiment, the aspect in which the protrusion 21k and the recess 22k are formed on the surface of the outer side surface of the sealing body 20 where the lead-out portion 20p is provided has been described. However, the outer side surface of the sealing body, including the surface on which the lead-out portion 20p is formed, may be flat without the protrusion 21k and the recess 22k being formed.

Further, the thermal conductivity of the detection line 30 may be equal to or higher than the thermal conductivity of the current collector 15, or the current collector 15 and the detection line 30 may be made of the same material.

In addition, the case where the detection lines 30 is the voltage detection line has been exemplified in the above embodiment. However, the detection line 30 may be a temperature detection line connected to a temperature sensor provided in the electrode stack 10. In addition, in the above embodiment, although the example in which the plurality of detection lines 30 are collectively inserted into one resin component 50 has been described, the plurality of detection lines 30 may be divided and inserted into the plurality of resin components 50.

In addition, the present invention is not limited to the case where the plurality of communication holes 53 are formed in the resin component 50, and one communication hole 53 may be formed in the resin component 50, and the plurality of detection lines 30 may be collectively inserted into the one communication hole 53. In addition, in the resin component 50, the opening portion of the communication hole 53 on the lead-out portion 20p side may not have the tapered shape. Further, the resin component 50 may not have the partition wall 51. Even in this case, an insulating property between the detection lines 30 can be secured by fixing each of the plurality of detection lines 30 by the filling resin layer 40.

Further, the recess 54 may not be formed in the resin component 50, and even in a case where the recess 54 is formed, the recess 54 may not have the widened portion 54b. Even in these cases, the resin for the filling resin layer 40 is welded to the resin component 50 and the sealing body 20, and thus, the resin can be fixed therebetween.

FIG. 7 is a perspective view illustrating a resin component according to a modification, and FIG. 8 is a schematic cross-sectional view taken along line VIII-VIII in FIG. 7. As illustrated in FIGS. 7 and 8, a resin component 50 can include a body portion 58 including a plurality of accommodation spaces 52 for accommodating a distal end portion of a detection line 30, and a pair of flange portions 59 protruding from an end portion of the body portion 58 on a sealing body 20 side to both sides in a direction (in this case, a third direction D3) intersecting a second direction D2. A plurality of (in this case, three) through-holes 64 arrayed along a first direction D1 are formed in each of the pair of flange portions 59.

The through-hole 64 extends along the second direction D2 and is opened to a facing surface 50b of the resin component 50 and an opposite surface 50r of the resin component 50 opposite to the facing surface 50b. That is, the through-hole 64 penetrates from the facing surface 50b to the opposite surface 50r. In the through-hole 64, a widened portion 64b of the facing surface 50b wider than an opening of the through-hole 64 is formed. As a result, a locking surface 64s is an inner surface of the through-hole 64, and faces the side opposite to the sealing body 20 formed in the resin component 50, as a step surface between an opening portion 64a of the through-hole 64 on the facing surface 50b side and the widened portion 64b. The locking surface 64s is a surface intersecting the second direction D2 and is a surface in an opposite orientation to the facing surface 50b.

These through-holes 64 are also filled with the filling resin layer 40. More specifically, the filling resin layer 40 is filled in the through-hole 64 so as to be formed at least from the facing surface 50b to the locking surface 64s (in this example, the entire through-hole 64 is filled). That is, in step S103, the resin filling is performed such that the filling resin layer 40 is formed at least from the facing surface 50b of the resin component 50 facing the sealing body 20 to the locking surface 64s (that is, the filling resin layer enters the widened portion 64b of the through-hole 64) (in this example, the filling resin layer 40 is formed over the entire through-hole 64).

As a result, the filling resin layer 40 formed in the through-hole 64 is locked to the locking surface 64s when the resin component 50 is about to be separated from the sealing body 20, and functions as a stopper. That is, the resin component 50 and the filling resin layer 40 can be firmly fixed to each other by an anchor effect due to a portion of the filling resin layer 40 filled in the through-hole 64. As described above, the through-hole 64 is a locking portion that has an opening in the facing surface 50b and assists the coupling between the filling resin layer 40 and the resin component 50.

Note that, as illustrated in FIG. 9, the through-hole 64 may be deformed into a cutout portion 74 opened to an outer edge of the flange portion 59 in the second direction D2. That is, in the example illustrated in FIG. 9, a plurality of (in this case, three) cutout portions 74 arrayed along the first direction D1 are formed in the flange portion 59. Note that FIG. 9 is a side view illustrating a resin component according to another modification, and FIG. 10 is a schematic cross-sectional view taken along line X-X in FIG. 9.

As illustrated in FIGS. 9 and 10, the cutout portion 74 extends along the second direction D2 and is opened to the facing surface 50b of the resin component 50 and the opposite surface 50r of the resin component 50 opposite to the facing surface 50b. Further, since the cutout portion 74 is formed on the outer edge of the flange portion 59 (that is, the resin component 50) in the third direction D3, the cutout portion is also opened to an outer side surface of the flange portion 59 (that is, the resin component 50) in the third direction D3.

A widened portion 74b wider than an opening of the cutout portion 74 in the facing surface 50b is formed in the cutout portion 74. As a result, a locking surface 74s is an inner surface of the cutout portion 74, and faces the side opposite to the sealing body 20 formed in the resin component 50, as a step surface between an opening portion 74a of the cutout portion 74 on the facing surface 50b side and the widened portion 74b. The locking surface 74s is a surface intersecting the second direction D2 and is a surface in an opposite orientation to the facing surface 50b.

These cutout portions 74 are also filled with the filling resin layer 40. More specifically, the filling resin layer 40 is filled in the cutout portion 74 so as to be formed at least from the facing surface 50b to the locking surface 74s (in this example, the entire cutout portion 74 is filled). That is, in step S103, the resin filling is performed such that the filling resin layer 40 is formed at least from the facing surface 50b of the resin component 50 facing the sealing body 20 to the locking surface 74s (that is, the filling resin layer enters the widened portion 74b of the cutout portion 74) (in this example, the filling resin layer 40 is formed over the entire cutout portion 74).

As a result, the filling resin layer 40 formed in the cutout portion 74 is locked to the locking surface 74s when the resin component 50 is about to be separated from the sealing body 20, and functions as a stopper. That is, the resin component 50 and the filling resin layer 40 can be firmly fixed to each other by an anchor effect due to a portion of the filling resin layer 40 filled in the cutout portion 74. As described above, the cutout portion 74 is a locking portion that has an opening in the facing surface 50b and assists the coupling between the filling resin layer 40 and the resin component 50.

### Reference Signs List

- 1: power storage module
- 10: electrode stack
- 11: bipolar electrode (electrode)
- 12: positive terminal electrode (electrode)
- 13: negative terminal electrode (electrode)
- 20: sealing body
- 20p: lead-out portion
- 30: detection line
- 40: filling resin layer
- 50: resin component
- 51: partition wall
- 53: communication hole (portion)
- 54: recess (locking portion)
- 64: through-hole (locking portion)
- 74: cutout portion (locking portion)
- S: internal space
- MD: mold

## Claims

1. A method for manufacturing a power storage module, comprising:
a first step of preparing a stack including an electrode stack formed by stacking a plurality of electrodes each including a current collector in which an active material layer is provided and a detection line provided in the current collector along a first direction, and a sealing body provided in the electrode stack so as to surround the electrode stack, the sealing body being configured to seal an internal space between the current collectors adjacent to each other in the first direction while leading out each of the detection lines included in the plurality of electrodes to an outside;
a second step of, after the first step, installing a resin component having a hole portion into which the detection line is inserted in the stack so as to form a gap with a lead-out portion of the detection line in the sealing body while facing the lead-out portion, and inserting a portion of the detection line led out from the lead-out portion into the hole portion of the resin component; and
a third step of forming, after the second step, a filling resin layer integrated with the sealing body by filling a space between the lead-out portion and the resin component with a resin by using a mold, and obtaining a power storage module including the stack, the resin component, and the filling resin layer,
wherein, in the third step, a space surrounded by the sealing body, the resin component, and the mold is formed by holding the sealing body and the resin component with the mold, and the filling resin layer is formed by filling the space with a resin.

2. The method for manufacturing a power storage module according to claim 1,
wherein the resin component includes a plurality of hole portions formed in a surface of the resin component facing the lead-out portion, and
in the second step, the resin component is installed in the stack such that a plurality of the detection lines are collectively inserted into the plurality of holes.

3. The method for manufacturing a power storage module according to claim 2,
wherein an opening portion in each of the hole portions of the resin component on the lead-out portion side is formed in a tapered shape enlarged toward the lead-out portion side.

4. The method for manufacturing a power storage module according to claim 2,
wherein the resin component has a plurality of partition walls that are provided upright on an opposite surface that is a surface opposite to a surface of the resin component facing the lead-out portion and are arrayed in the first direction, and
in the second step, the resin component is installed in the stack such that the partition wall is interposed between distal end portions of the detection lines inserted into the hole portions.

5. The method for manufacturing a power storage module according to any one of claims 1 to 4,
wherein a locking portion which has an opening in a facing surface of the resin component facing the sealing body and assists coupling between the filling resin layer and the resin component is formed in the resin component, and
in the third step, resin filling is performed such that the filling resin layer is formed from the facing surface of the resin component to an inside of the locking portion through the opening.

6. The method for manufacturing a power storage module according to claim 5,
wherein the locking portion is a through-hole opened to the facing surface and penetrates from the facing surface to an opposite surface of the resin component opposite to the facing surface,
a widened portion wider than an opening of the through-hole in the facing surface is formed in the through-hole, and
in the third step, the resin filling is performed such that the filling resin layer enters the widened portion of the through-hole.

7. The method for manufacturing a power storage module according to claim 5,
wherein the locking portion is a cutout portion opened to the facing surface,
a widened portion wider than an opening of the cutout portion in the facing surface is formed in the cutout portion, and
in the third step, the resin filling is performed such that the filling resin layer enters the widened portion of the cutout portion.

8. The method for manufacturing a power storage module according to claim 5,
wherein the locking portion is a recess opened to the facing surface,
a widened portion wider than an opening of the recess in the facing surface is formed in the recess, and
in the third step, the resin filling is performed such that the filling resin layer enters the widened portion of the recess.

9. The method for manufacturing a power storage module according to any one of claims 1 to 8,
wherein, in the third step, filling of the same resin as at least a part of the sealing body is performed.

10. A power storage module comprising:
a stack including an electrode stack formed by stacking a plurality of electrodes each including a current collector in which an active material layer is provided and a detection line provided in the current collector along a first direction, and a sealing body provided in the electrode stack so as to surround the electrode stack, the sealing body being configured to seal an internal space of the electrode stack while leading out each of the detection lines included in the plurality of electrodes to an outside;
a resin component that is disposed so as to face a lead-out portion of the detection line in the sealing body and into which the detection line is inserted; and
a filling resin layer formed so as to fill a space between the lead-out portion and the resin component,
wherein the lead-out portion and the resin component are fixed to each other by the filling resin layer.
